## Europäisches Patentamt
(19) **European Patent Office**

**Office européen des brevets**

(11) Veröffentlichungsnummer: **0 007 559**

**A1**

(12) # EUROPÄISCHE PATENTANMELDUNG

(21) Anmeldenummer: **79102495.3**

(22) Anmeldetag: **17.07.79**

(51) Int. Cl.³: **B 60 R 5/00**
**B 62 D 25/12**

(30) Priorität: **24.07.78 DE 2832471**

(43) Veröffentlichungstag der Anmeldung:
**06.02.80 Patentblatt 80/3**

(84) Benannte Vertragsstaaten:
**AT DE FR GB IT NL SE**

(71) Anmelder: **Heilmann, Albert**
**Caixa Postal 5006**
**ZC-37 Rio de Janeiro GB(BR)**

(72) Erfinder: **Heilmann, Albert**
**Caixa Postal 5006**
**ZC-37 Rio de Janeiro GB(BR)**

(74) Vertreter: **von Bezold, Dieter, Dr. et al,**
**Patentanwälte Dr. D. von Bezold, Dipl.-Ing. P. Schütz,**
**Dipl.-Ing. W. Heusler Maria-Theresia-Strasse 22**
**Postfach 86 06 68 D-8000 München 86(DE)**

(54) **Vorrichtung zum Vergrössern von Gepäckräumen in Kraftfahrzeugen.**

(57) Zum Vergrößern von Gepäckräumen in Kraftfahrzeugen ist eine Vorrichtung in Form eines Einsatzes vorgesehen, der die Klappe (4) des Gepäckraumes offen hält und die dabei entstehende Lücke schließt. Der Einsatz besteht aus einem etwa rechteckigen Rückwandteil (1) und an dessen Schmalseiten mit ihm verbundenen etwa dreieckförmigen Seitenwandteilen (5). Nahe den Dichtungsbereichen von Karosserie und Klappe (4) ist der Einsatz mit letzteren verbindbar. Zusätzlich ist eine Dichtleiste (6) für den durch das Hochklappen entstehenden Restspalt an der Gelenkseite der Klappe (4) vorgesehen.

EP 0 007 559 A1

10614/EU H/Vu

Albert Heilmann
Caixa Postal 5006, ZC-37 Rio de Janeiro GB
(Brasilien)

## Vorrichtung zum Vergrößern von Gepräckräumen in Kraftfahrzeugen

Die Erfindung betrifft eine Vorrichtung zum Vergrößern von Gepäckräumen in Kraftfahrzeugen.

Oft besteht das Bedürfnis, sperrige Gegenstände in Kofferräumen von Kraftfahrzeugen zu transportieren. Dabei muß dann häufig die Bug- oder Heckklappe geöffnet und über dem Gepäck behelfsmäßig festgezurrt werden. Dies ist zeitraubend und unsicher.

Die Erfindung hat sich zur Aufgabe gestellt, eine Vorrichtung anzugeben, die hier in sicherer und ökonomisch vertretbarer Weise Abhilfe schafft, und die als Sonderteil in das Programm eines Wagentyps eingeplant werden kann.

Gelöst wird diese Aufgabe durch einen Einsatz, der die Bug- und/oder Heckraumklappe offen hält oder offen zu halten gestattet und derart ausgebildet ist, daß er die jeweils durch das vollständige oder teilweise Hochklappen entstehende Lücke schließt und zwischen die dichtungsrandnahen Bereiche von Karosserie und Klappe einsetzbar ist, insbesondere einen etwa rechteckigen Rückwandteil mit Fenster und je einen an dessen Schmalseiten anschließenden, starr oder gelenkig mit diesem verbundenen etwa dreieckförmigen Seitenwandteil aufweist, wobei sich der Einsatz
nahe den genannten Dichtungsbereichen durch Reiß-, Magnet-,
insbesondere aber Klappenverschlüsse mit Klappe und Karosserie verbinden läßt und zusätzlich eine Dichtleiste für
den durch das Hochklappen entstandenen gelenkseitigen
Restspalt an der Klappe vorgesehen ist.

Gemäß vorteilhaften Weiterbildungen kann der Einsatz in
sich starr, insbesondere aus Kunststoff und hier wiederum
aus Glasfaserkunststoff bestehen, ein eingeklebtes Fenster aufweisen, und es können die Seitenteile mittels
Klebung oder Schweißung mit Hilfe z.B. gewellter Streifen
mit dem Rückwandteil der Vorrichtung verbunden sein. Die
Vorrichtung kann auch durchsichtig sein.

Eine weitere Ausbildung sieht eine Höhenverstellbarkeit
der Wände der Vorrichtung insbesondere durch Ausbildung
als hinreichend flattersicherer Faltenbalg vor, wobei an
eine Anwendung für feststellbare Klappen gedacht ist. Der
Balgteil weist dann einen festen Rahmen auf, an dem die
Befestigungsvorrichtungen liegen.

Damit solche elastischen Teile verwendbar sind, kann auch
die Anwendung von insbesondere längenverstellbaren Verstärkungsrippen vorteilhaft sein, die verschieblich z.B.
über Ringe mit dem Balg oder der sonstwie höhenverstellbaren Vorrichtung verbunden sind und so die Klappe in vorbestimmbarer Stellung halten. Weitere vorteilhafte Ausführungen gestalten die für den gelenkseitigen Restspalt
der Klappe vorgesehene Dichtleiste entweder als elastische
Leiste aus Schaummaterial oder als aufblasbare Dichtmanschette oder aber als dem Spalt unterlegbare Rinne, die
sich durch die Wände der Vorrichtung mit zwei U-Schenkeln
wasserableitend stecken läßt und den Restspalt unterfängt.

3

Die Ränder der Vorrichtung sind entweder selbstdichtend oder so gestaltet, daß sie auf vorhandenen - meist karosserieseitigen - Dichtleisten dichtend aufliegen. Auf der Seite, auf der keine solche Leiste ist, muß selbstverständlich die Kante der Vorrichtung mit einer solchen ausgestaltet sein.

Die Vorrichtung wird nun an einem Ausführungsbeispiel erläutert. Es zeigen:

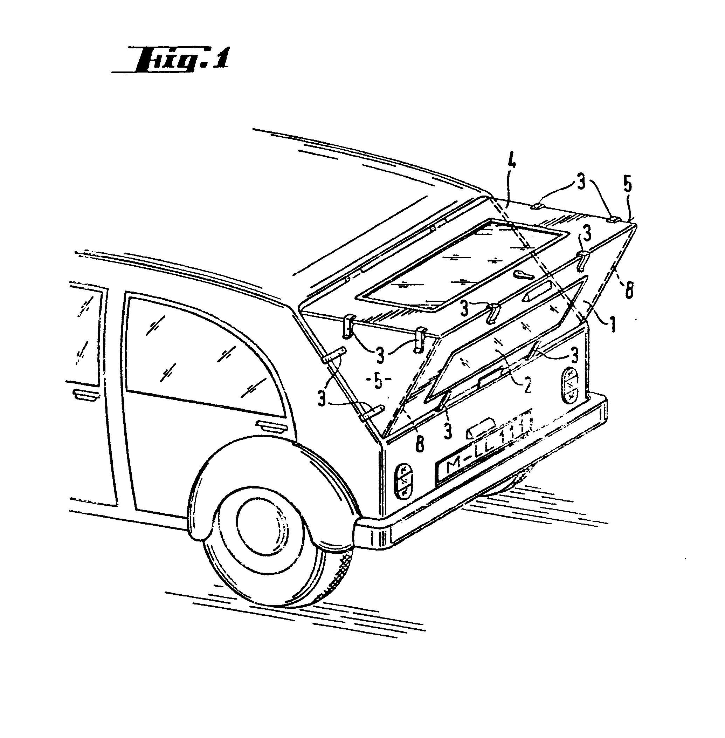

Fig. 1 eine rückwärtige keilartige erfindungsgemäße Vorrichtung mit Rückfenster und Klappverschluß;

Fig. 2 eine ebensolche sowie eine in den Restspalt einsteckbare Dichtleiste.

Beide Figuren zeigen als bevorzugte Ausführungsform der Erfindung einen starren oder mit klappbaren Dreiecksteilen 5 versehenen Einsatz 1, der durch Klappverschlüsse 3 mit Karosserie und Klappe 4 verbunden werden kann, wozu an der Karosserie und der Klappe entsprechende Gegenstücke vorgesehen sind. Dabei erfolgt die Anlenkung der Seitenteile vorteilhaft durch zähelastische, insbesondere längsgewellte Streifen aus Kunststoff 8, die mit den Wandteilen der Vorrichtung (1 und 5) verschweißt oder verklebt sind.

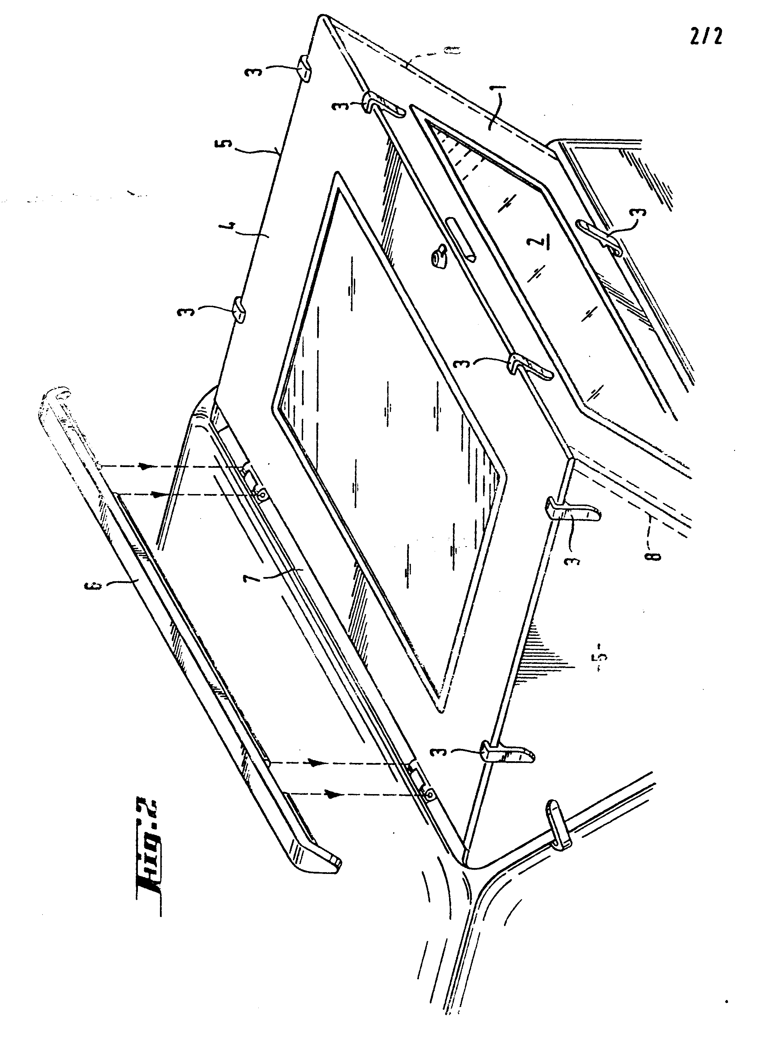

Bei der Faltenbalg-Ausführung eignen sich als an den Rahmenteilen anzubringenden Verbindungselementen vor allem Magnetleisten oder Reißverschlüsse, da hier die Hauptlast entweder von der feststellbaren Klappe oder von den Verschlußorganen der Verstärkungsrippen getragen wird. Ein Fenster 2 ist in allen Heckausführungen notwendig. Eine einsteckbare Dichtleiste 6 mit Steckteil 9 für Restspalt 7 ist in Fig. 2 dargestellt.

Insbesondere bei der zusammenklappbaren Einsatzvorrichtung läßt es sich einrichten, daß der Einsatz im Kofferraum mitgeführt wird, sei es in der Ausführung als Faltenbalg oder mit einklappbaren Seitenteilen.

10614EU/H/Vu

1) Vorrichtung zum Vergrößern von Gepäckräumen in Kraftfahrzeugen, d a d u r c h  g e k e n n z e i c h - n e t , daß sie als Einsatz ausgebildet ist, der die Bug- oder Heckklappe offen hält oder offen zu halten gestattet, so daß die jeweils durch das ganze oder teilweise Hochklappen entstehende Lücke durch ihn geschlossen ist, und der so gestaltet ist, daß er zwischen die dichtungsrandnahen Bereiche von Karosserie und Klappe (4) einsetzbar ist, einen etwa rechteckigen Rückwandteil (1) mit Fenster und je einen an dessen Schmalseiten mit diesem verbundenen etwa dreieckförmigen Seitenwandteil (5) aufweist, wobei sich der ganze Einsatz nahe den genannten Dichtungsbereich- chen durch Reiß-, Magnet-, insbesondere aber Klappverschlüsse mit der Klappe (4) und der Karosserie verbinden läßt und zusätzlich eine Dichtleiste (6) für den durch das Hochklappen entstandenen Restspalt an der Gelenkseite der Klappe (4) vorgesehen ist.

2) Vorrichtung nach Anspruch 1, d a d u r c h  g e - k e n n z e i c h n e t , daß sie in sich annähernd starr und insbesondere aus Kunststoffplatten, insbesondere aus Glasfaserkunststoff gebildet ist.

3) Vorrichtung nach Anspruch 2, d a d u r c h  g e - k e n n z e i c h n e t , daß sie ein eingeklebtes Fenster aufweist oder selbst ganz oder teilweise durchsichtig ist.

2

4) Vorrichtung nach Anspruch 1, d a d u r c h g e - k e n n z e i c h n e t , daß die dreieckförmigen Seitenteile durch weiche, zähelastische Streifen, insbesondere gewellte Streifen, durch Schweißung oder Klebung am Rückwandteil angelenkt sind, so daß sie sich auf diesen klappen lassen.

5) Vorrichtung nach Anspruch 1, d a d u r c h g e - k e n n z e i c h n e t , daß sie zur Veränderung der Höhendimension als hinreichend flatterfester Faltenbalg mit festem Rahmen mit Befestigungsmitteln ausgebildet ist.

6) Vorrichtung nach Anspruch 6, d a d u r c h g e - k e n n z e i c h n e t , daß sie zum Einsatz an Bug- oder Heckklappen vorgesehen ist, die sich in ihrer Offenstellung verriegeln lassen.

7) Vorrichtung nach Anspruch 5, g e k e n n z e i c h - n e t d u r c h über Ringe verschieblich mit den Einsatzteilen verbundene senkrecht zwischen Klappe und Karosserie einsetzbare steifen, insbesondere ebenfalls längenverstellbaren Verstärkungsrippen, an deren Enden Befestigungsmittel für Karosserie und Klappe angebracht sind.

8) Vorrichtung nach einem der vorhergehenden Ansprüche, g e k e n n z e i c h n e t d u r c h eine Dichtleiste (6) für den Restspalt, aus elastischem Material, insbesondere aus dichtendem zähen Schaumstoff, welche Leiste die Spalte übergreift und sich mit einem schmäleren, die Scharniere aussparenden Ansatz dichtend in die Spalte drücken läßt.

9) Vorrichtung nach einem der vorhergehenden Ansprüche, d a d u r c h g e k e n n z e i c h n e t , daß die Dichtleiste als aufblasbare Manschettenleiste ausgeführt ist.

10) Vorrichtung nach einem der vorhergehenden Ansprüche, dadurch gekennzeichnet, daß die Dichtleiste als U-förmige Rinne gestaltet ist, die sich derart in zwei Öffnungen der Anordnung stecken läßt, daß sie den Restspalt unterfängt und Regenwasser nach außen ableitet.

11) Vorrichtung nach einem der vorhergehenden Ansprüche, dadurch gekennzeichnet, daß ihre Ränder zur dichtenden Anlage an der Karosserie und/oder Klappe ausgebildet sind.

**Fig.1**

Fig:2

0007559

Europäisches Patentamt

# EUROPÄISCHER RECHERCHENBERICHT

Nummer der Anmeldung

EP 79 102 495.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE – A – 1 630 102 (F. BOYSEN)<br>* Seite 4, Zeilen 12 bis 14 und Seite 5, Zeile 1; Fig. 1 * | 1-3,8 |
| | --- | |
| X | US – A – 3 879 080 (D.P. FREEMAN)<br>* Fig. 1 * | 1,3 |
| | --- | |
| | DE – A1 – 2 506 620 (K. PALAPIES)<br>* Fig. 1 bis 3 * | 1,8 |
| | --- | |
| | FR – A – 1 265 990 (J.D. ARRAULT)<br>* Fig. 4 * | 1,5 |
| | --- | |
| | FR – A5 – 2 245 190 (R. DONAT-MAGNIN)<br>* Fig. 1 und 2 * | 1,4 |
| | --- | |
| | DE – U – 7 418 426 (R. PETERS)<br>* Seite 5, Zeile 9; Fig. 2 * | 1,2 |
| | --- | |
| | DE – U – 7 726 441 (H. REISS)<br>* Fig. 1 * | 1 |
| | --- | |
| | FR – A – 843 034 (P. BRISSONNET)<br>* Fig. 1 * | 1 |
| | ---- | |

### KLASSIFIKATION DER ANMELDUNG (Int.Cl.)

B 60 R  5/00
B 62 D 25/12

### RECHERCHIERTE SACHGEBIETE (Int. Cl.)

B 60 R  5/00
B 60 R  7/00
B 60 R  9/00
B 62 D 25/00
B 62 D 31/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 10-10-1979 | BECKER |

EPA Form 1503 1 06.78